# EUROPEAN PATENT SPECIFICATION

(11) **EP 2 909 469 B1**
(45) Date of publication and mention of the grant of the patent: **28.03.2018**
(21) Application number: 13779517.5
(22) Date of filing: 16.10.2013
(51) Int. Cl.: F03D 80/00

(54) **A WIND TURBINE**
WINDTURBINE
ÉOLIENNE

(30) Priority: 19.10.2012 DK 201200642; 26.10.2012 US 201261718718 P
(43) Date of publication of application: 26.08.2015
(73) Proprietor: Vestas Wind Systems A/S, 8200 Aarhus N (DK)
(72) Inventor: RYTTER, Frederik, DK-8800 Viborg (DK); BITSCH, Michael Lundgaard, DK-8870 Langå (DK)
(74) Representative: Vestas Patents Department
(86) International application number: PCT/DK2013/050333
(87) International publication number: WO 2014/059994

(56) References cited:
- DE-A1-102010 043 436
- ES-A1- 2 359 310
- US-A1- 2011 241 353

## Description

### Field of invention

The present invention relates to a wind turbine comprising a rotor being adapted to be parked, such that access from the nacelle to the rotor-centre-structure is formed.

### Background of the invention

Wind turbines typically have a nacelle and a rotor being rotatable relative to the nacelle which contains the electrical power-generating components. The rotor comprises a plurality of blades mounted on a hub. Sometimes it is necessary to perform maintenance tasks or repair with in the hub, in which case replacement components and sometimes personnel needs to be transported into the interior of the hub. Traditionally, these replacement components and/or personnel are transported into the interior of the hub through an opening at the top of the hub, using a crane.

If the opening for some reasons becomes blocked or if access to the opening becomes difficult, e.g. due to the orientation of the hub relative to the nacelle, potentially dangerous incidents may occur.

### Description of the invention

It is an object of embodiments of the invention to provide an improved wind turbine, and particularly to improve safety in relation to maintenance and/or repair of wind turbines.

According to a first aspect, the invention provides a wind turbine comprising a nacelle and a rotor being rotatable about an axis and relative to the nacelle, the rotor comprising a plurality of blades mounted on a rotor-centre-structure and being adapted to be parked in a plurality of parking positions, wherein each of the parking positions provides at least two simultaneously appearing passages suitable for passage of personnel from the nacelle into an inner space in the rotor-centre-structure, each passage being formed by a nacelle-opening into the nacelle in communication with a matching RCS-opening into the rotor-centre-structure.

The rotor-centre-structure may comprise a hub carrying the plurality of blades. In an alternative embodiment, the rotor-centre-structure may further comprise a spinner which may be provided to cover the hub and/or to improve the aerodynamic properties of the hub and blade interfaces.

The rotor-centre-structure is adapted to be parked in a plurality of parking positions. The parking position may e.g. be chosen based on the maintenance and/or repair work which has to be carried out in the rotor-centre-structure. Accordingly, the parking positions may provide different orientations of the blades, e.g. positions where one blade being vertical or horizontal.

The inner space of the rotor-centre-structure could be inside the hub or it could be between the hub and a spinner.

Each passage is formed by a nacelle-opening and a matching RCS-opening. The nacelle-opening is an opening formed in a wall of the nacelle, whereas the RCS-opening (i.e. Rotor-Centre-Structure-opening) is an opening formed in a wall of the rotor-centre-structure, such as a wall of a hub or a wall of a spinner. In order to provide at least two simultaneously appearing passages suitable for passage of personnel, both the nacelle and the rotor-centre-structure comprises at least two openings each, i.e. the wind turbine comprises at least two nacelle-openings and at least two RCS-openings.

The nacelle-opening and the matching RCS-opening may be of identical or different shape and/or size.

Furthermore, the size and shape of two nacelle-opening may be identical or different. This may also be the case for two RCS-openings. Thus, by a matching pair of a nacelle-opening and an RCS-opening is meant that the two openings cooperate to allow access from the nacelle to the inner space of the rotor-centre-structure through the matching pair of openings.

The openings may be of a size which allows personnel to reasonably freely pass the openings. Furthermore, the size of at least some of the openings may be large enough for the personnel to bring tools, spare parts, or other items when passing the openings.

When the rotor is parked in a parking position at least two passages appear, each being formed by a nacelle-opening in communication with an RCS-opening. Communication may be achieved by aligning a nacelle-opening and an RCS-opening. By "aligned" is herein meant, that a nacelle-opening is at least partly overlapping an RCS-opening when viewed in parallel with the axis. However, communication may also be achieved when the nacelle-opening and the RCS-opening are not aligned. In the latter case, the maintenance and/or repair personnel may first pass one of the openings and may then have to move sideways and/or upwards or downwards before passing the second one of the openings.

A nacelle-opening may in one parking position communicate with one RCS-opening to form a passage, whereas the same nacelle-opening in another parking position may communicate with another RCS-opening to form a passage. In a third parking position the same nacelle-opening may not be in communication with an RCS-opening, thereby not forming part of a passage. Likewise an RCS-opening may in one parking position communicate with one nacelle-opening to form a passage, whereas the same RCS-opening in another parking position may communicate with another nacelle-opening to form a passage. In yet another parking position the same RCS-opening may not be in communication with a nacelle-opening.

As each of the parking positions provides at least two simultaneously appearing passages from the nacelle into an inner space in the rotor-centre-structure, the invention may be seen to provide an escape passage of out of the rotor-centre-structure if the passage used for entrance into the rotor-centre-structure for some reasons becomes blocked or if access hereto becomes difficult.

The wind turbine may comprise a braking system by which the rotor can be stopped in the parking positions. The braking system may comprise a controller and sensors such that the parking positions can be determined, and the brake may be operated automatically, e.g. based on a user selected parking position. The user may e.g. select between 6 or more predetermined positions each providing two passages between the nacelle and the rotor-centre-structure.

In order to maintain or carry out repair work at an interface between a blade and the rotor-centre-structure, it may be an advantage to be able to position the blade in question in which the longitudinal direction of the blade is substantially horizontal. To facilitate this work, the parking positions may comprise six different positions in which the longitudinal direction of one of the blades is substantially horizontal. The location of the at least two simultaneously appearing passages from the nacelle into an inner space in the rotor-centre-structure may be dependent on which of the blades is positioned horizontally.

Some type of maintenance and/or repair work may be facilitated by positioning one of the blades so that the longitudinal direction of this blade is substantially vertical. Thus, the parking positions may comprise six different positions in which the longitudinal direction of one of the blades is substantially vertical. As it may be preferred to park the rotor so that the blade in question extends downwardly instead of upwardly, the three vertical downwardly extending positions may be mainly relevant.

Entrance into the rotor-centre-structure may be facilitated by providing at least two of the nacelle-openings so that they are located at different vertical levels in the nacelle. Entrance into the rotor-centre-structure may be chosen based on where the work has to be carried out, whereby the distance to the working placed can be minimized. Minimizing the distance may also be achieved by the below description of the positioning of the passages at opposite sides of the rotor opening.

As the rotor-centre-structure may be attached to the rotor shaft outside the nacelle, at least one of the nacelle-openings may be formed in an end wall of the nacelle, which end wall may be facing the rotor-centre-structure. It should be understood, that by "facing" is meant that the end wall is opposite to the rotor-centre-structure, so that they are either parallel to each other or being positioned so that at an angle between the two are in the range of 0-45 degrees, such as 0-30 degrees, or such as 0-15 degrees. The distance between the end wall and the rotor-centre-structure may be greater at the top or at the bottom. Furthermore, the end wall may be angled relative to the rotor-centre-structure so that the distance here between is greater at the right side of the axis than at the left side, and vice versa.

The rotor may extend through a rotor opening formed in the end wall. The nacelle-openings and the RCS-openings may be provided so that the at least two passages are provided at opposite sides of the rotor opening, thereby provided a larger distance from one passage to the other. This may be particularly relevant in case of fire at one area in the rotor-centre-structure, as the likelihood that the other passage may also be block by fire may decrease with an increasing distance between the at least two passages.

A wind turbine according to the invention may however comprise a rotor-centre-structure being adapted to be parked in parking positions where the at least two passages are provided at opposite sides of the rotor opening and may be adapted to be parked in other parking positions where the at least two passages are at the same side of the rotor opening. Furthermore, at least one of the passages may be located at a position perpendicular to the rotor opening.

At least one of the nacelle-openings may be formed in a nacelle-wall being angled relative to the axis, i.e. the nacelle-wall may be located so that it is not perpendicular to the axis so that the angle relative to the axis is larger than zero degrees and smaller than 90 degrees, preferably 10-80 degrees, more preferably 30-60 degrees. The nacelle-wall may thus be angled relative to the end-wall of the nacelle.

Likewise at least one of the RCS-openings may be facing the nacelle. The RCS-openings may be formed in a wall element of the rotor-centre-structure, e.g. a wall element of the hub or the spinner.

The distance between the end wall of the nacelle and the rotor-centre-structure may be in the range of 30-150 mm, such as in the range of 50-90 mm, thereby ensuring that personnel who have to enter the rotor-centre-structure from the nacelle are not exposed to the risk of falling down between the nacelle and the rotor-centre-structure.

The nacelle-wall being angled relative to the axis may form part of an upper part of the end wall of the nacelle, thereby forming a recess in the end wall. This may be especially advantageous if the nacelle-opening and the RCS-opening in question are not aligned so that personnel has to move sideways and/or upwards or downwards outside the nacelle and the rotor-centre-structure before entering the rotor-centre-structure from the nacelle and vice versa. By forming the angled nacelle-wall in a recess, the recess may protect the personnel from falling down.

In embodiments comprising both a hub and a spinner, at least some of the passages may comprise three openings, as at least some of the RCS-openings may comprise an opening in the hub and an additional opening in the spinner.

If the hub is covered by a spinner, at least one of the openings in the hub may be comprise a closing structure made from a light-weight material, such a canvas, as such a closing structure may be easily removed in case of an emergency situation. Removal of the closing structure may be further facilitated by an attachment structure comprising a zipper, a hook- and-loop fastener structure such as Velcro™, a plurality of snap fasteners, or similar structures.

The spinner may be of a size which allows personnel to move within a confined space defined between the spinner and the hub. This may facilitate maintenance and repair of different components of the hub, the spinner, and/or the blades.

As potentially dangerous situations may occur, if personnel by mistake try to pass a nacelle-opening or an RCS-opening not forming part of a passage in the actual parking position, at least one of the passages may comprise a closing structure adapted to bar this opening. The closing structure may bar only one of the openings, or it may alternatively be adapted to bar both a nacelle-opening and an RCS-opening at the same time. As a further alternative, the closing structure may comprise two separate closing elements, a nacelle-closing element for barring a nacelle-opening and an RCS-closing element for barring an RCS-opening. In case of two separate closing elements, these elements may be operated simultaneously to facilitate opening and closing of the passage.

In one embodiment, the closing structure may comprise a nacelle-hatch and an RCS-hatch. The hatches may be hingely connected to the nacelle and the rotor-centre-structure, respectively. Alternatively, at least one of the hatches may be adapted to be fully removed from the opening. This may be especially advantageous at locations where there is only a limited space thus hindering opening and closing of the nacelle-openings and RCS-openings.

The nacelle and/or the rotor-centre-structure may comprise at least one fixture adapted to carry a nacelle-hatch and/or an RCS-hatch which has been removed from the associated opening to allow access from the nacelle to the RCS-structure.

The wind turbine may comprise a safety structure adapted to release the closing structure when at least two nacelle-openings are in communication with two matching RCS-openings. To increase safety, the safety structure may be adapted to release the closing structure only when at least two nacelle-opening are in communication with two matching RCS-opening. The safety structure may comprise a controller and sensors such that the positions of the nacelle-openings and the RCS-openings can be determined. The safety structure may be operated automatically, e.g. based on a user selected parking position.

It may however be possible to open a nacelle-opening which is not in communication with a matching RCS-opening, as a nacelle-opening may be used for monitoring purposes. As an example, a nacelle-opening may be opened when a blade is to be mounted to the hub. Personnel positioned in the nacelle may supervise the mounting via the nacelle-opening.

According to a second aspect, the invention provides a method of establishing access between a nacelle and a rotor-centre-structure of a wind turbine, the rotor-centre-structure being rotatable about an axis and relative to the nacelle, the method comprising the steps of:
- providing a plurality of nacelle-openings into the nacelle;
- providing a plurality of RCS-openings into the rotor-centre-structure; and
- predefining a plurality of parking positions, wherein each of the parking positions provides at least two simultaneously appearing passages suitable for passage of personnel from the nacelle into an inner space in the rotor-centre-structure, each passage being provided by one of the nacelle-openings and one of the RCS-openings.

It should be understood, that a skilled person would readily recognise that any feature described in combination with the first aspect of the invention could also be combined with the second aspect of the invention, and vice versa.

The wind turbine according to the first aspect of the invention is very suitable for performing the method steps according to the second aspect of the invention. The remarks set forth above in relation to the wind turbine are therefore equally applicable in relation to the method.

### Brief description of the drawings

Embodiments of the invention will now be further described with references to the drawings, in which:
Figs. 1-3 illustrate different views of a nacelle and a rotor-centre-structure,
Fig. 4 illustrates a nacelle seen from the front,
Fig. 5 illustrates a rotor-centre-structure seen from behind,
Figs. 6 and 7 illustrate a nacelle and a rotor-centre-structure seen from in front of the rotor-centre-structure, and
Figs. 8 and 9 schematically illustrate two different parking positions.

### Detailed description of the drawings

It should be understood that the detailed description and specific examples, while indicating embodiments of the invention, are given by way of illustration only, since various changes and modifications within the spirit and scope of the invention will become apparent to those skilled in the art from this detailed description.

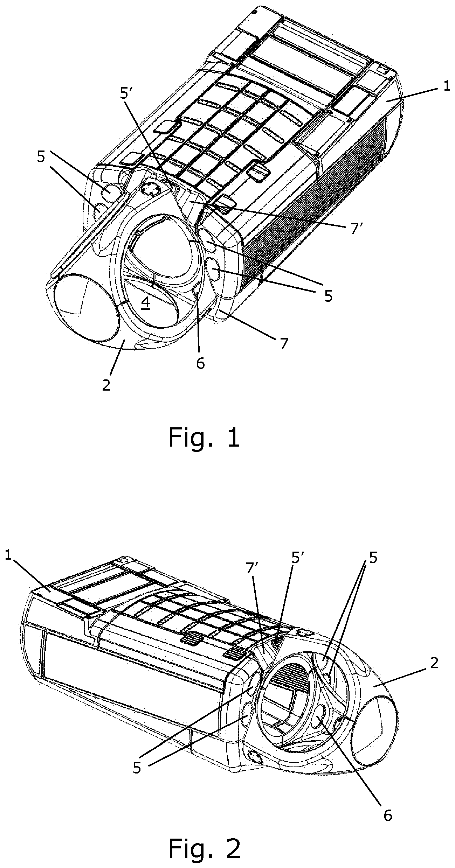

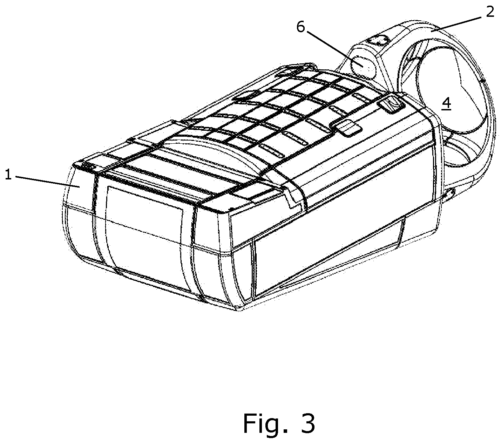

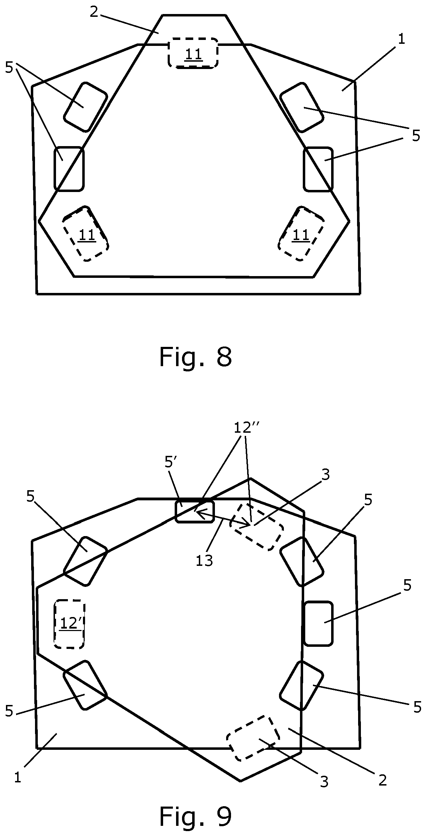

Figs. 1-3 illustrate different views of a nacelle 1 and a rotor-centre-structure 2 forming part of a wind turbine (not shown). The wind turbine comprises a nacelle 1 and a rotor being rotatable about an axis and relative to the nacelle 1. The rotor comprises a plurality of blades (not shown) mounted on a rotor-centre-structure 2 and is adapted to be parked in a plurality of parking positions. Each of the parking positions provides at least two simultaneously appearing passages 11, 12 suitable for passage of personnel (see Figs. 8 and 9) from the nacelle 1 into an inner space 4 in the rotor-centre-structure 2. Each passage 11, 12 is formed by a nacelle-opening 5 into the nacelle 1 in communication with a matching RCS-opening 6 into the rotor-centre-structure 2.

The rotor-centre-structure 2 comprises a hub (not shown) and a spinner 2 covering the hub.

The nacelle-openings 5 are openings formed in the outer wall of the nacelle 1, whereas the RCS-openings 6 are openings formed in the outer wall of the rotor-centre-structure 2. In the illustrated embodiment, six nacelle-openings 5 are formed in an end wall 7 facing the rotor-centre-structure 2.

However, one of the nacelle-openings 5' is formed in a nacelle-wall 7' being angled relative to the rotor axis, whereby the nacelle-wall 7' is located so that it is not perpendicular to the axis.

In the illustrated embodiment, the three RCS-openings 6 are formed in a wall element 8 of the rotor-centre-structure 2, which wall element 8 is facing the nacelle 1.

The distance between the end wall 7 of the nacelle 1 and the wall element 8 of the rotor-centre-structure 2 is approximately 80 mm to ensure that personnel who enter the rotor-centre-structure 2 from the nacelle 1 are not exposed to the risk of falling down between the nacelle and the rotor-centre-structure.

The nacelle-wall 7' which is angled relative to the end wall 7 of the nacelle forms part of the end wall, whereby a recess is formed in the end wall. This recess is especially advantageous in relation to parking positions in which the nacelle-opening 5, 5' and the RCS-opening 6 in question are not aligned, as personnel in such situations have to move sideways outside the nacelle 1 and the rotor-centre-structure 2 before entering the rotor-centre-structure from the nacelle and vice versa. By forming the angled nacelle-wall in a recess, the recess may protect the personnel from falling down.

In the illustrated embodiment, the nacelle-openings 5, 5' and the RCS-openings 6 are substantially identical, both with regards to shape and size.

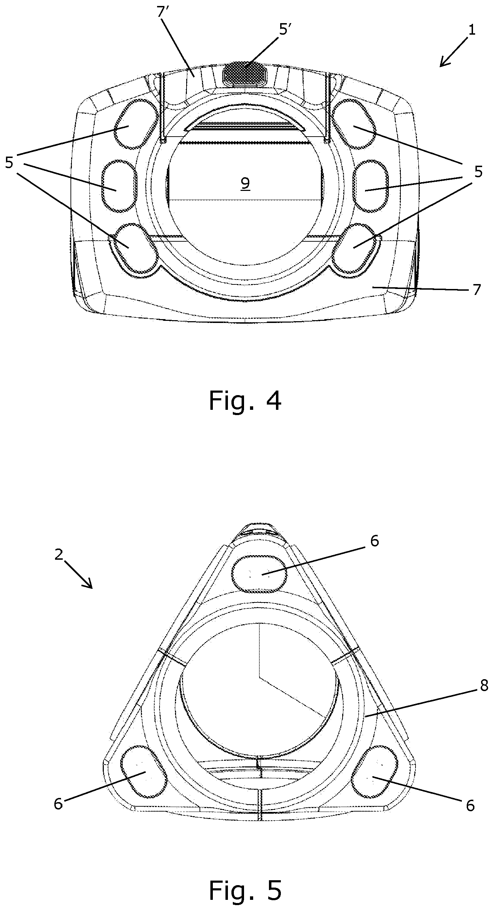

Fig. 4 illustrates a nacelle 1 seen from the front where the rotor-centre-structure has been omitted, whereby each of the seven nacelle-openings 5, 5' can be seen. Three of the nacelle-openings 5 are positioned at one side of the rotor axis (not shown), whereas three other nacelle-openings are positioned at the opposite side of the rotor axis. The large rotor opening 9 in the middle of the nacelle 2 is for the main shaft and does usually not allow access to and from the nacelle.

Fig. 5 illustrates a rotor-centre-structure 2 seen from behind where the nacelle has been omitted, whereby each of the three RCS-openings 3 of this embodiment can be seen.

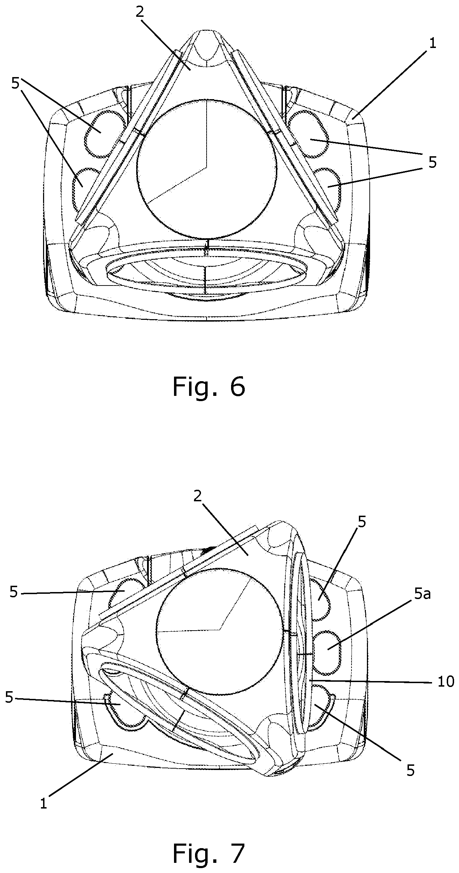

Figs. 6 and 7 illustrate a nacelle 1 and a rotor-centre-structure 2 seen from in front of the rotor-centre-structure. The parking position illustrated in Fig. 6 is primarily used in connection with maintenance and repair tasks whereas the parking position illustrated in Fig 7 primarily is used in connection with mounting or exchange of blades. When attaching a blade (not shown) to the blade flange 10, the work may be supervised by personnel looking out through one of the nacelle-openings 5, i.e. the nacelle-opening 5a positioned centrally relative to the blade flange 10.

Figs. 8 and 9 schematically illustrate two different parking positions. The parking positions correspond to the parking positions of Figs. 6 and 7, respectively. Nacelle-openings 5 are illustrated by solid lines, whereas the RCS-openings 3 are illustrated by dotted lines.

The parking position illustrated in Fig. 8 provides three simultaneously appearing passages 11 from the nacelle 1 into an inner space 4 of the rotor-centre-structure 2. Each passage 11 is formed by a nacelle-opening 5, 5' into the nacelle in communication with a matching RCS-opening 6 into the rotor-centre-structure. In this parking position the nacelle-openings and the RCS-openings in communication are aligned.

The parking position illustrated in Fig. 9 provides two simultaneously appearing passages 12 from the nacelle 1 into an inner space 4 of the rotor-centre-structure 2. Each passage 12 is formed by a nacelle-opening 5, 5' into the nacelle in communication with a matching RCS-opening 6 into the rotor-centre-structure. In this parking position one of the passages 12' comprises a nacelle-opening 5 being aligned with an RCS-opening 6, whereas the other passage 12" comprises a nacelle-opening 5' and an RCS-opening 6 which are not aligned.

When using the passage 12", personnel has to move sideways outside the nacelle 1 and the rotor-centre-structure 2 before entering the rotor-centre-structure from the nacelle and vice versa. This route is indicated by the arrow 13. The nacelle-opening 5' in question is positioned in the angled nacelle-wall 7'. This nacelle-wall 7' is located in the recess. Likewise the RCS-opening 3 in question is positioned so that it faces the recess. Thus, the recess may protect the personnel from falling down, when using the passage 12" along the pathway indicated by the arrow 13.

## Claims

1. A wind turbine comprising a nacelle, (1) a rotor (2) being rotatable about an axis and relative to the nacelle, and a braking system, the rotor comprising a plurality of blades mounted on a rotor-centre-structure and being adapted to be parked in a plurality of parking positions, wherein each of the parking positions provides at least two simultaneously appearing passages suitable for passage of personnel from the nacelle into an inner space in the rotor-centre-structure, each passage being formed by a nacelle-opening (5) into the nacelle in communication with a matching rotor-centre-structure-opening (6) into the rotor-centre-structure, and wherein the braking system is configured to stop the rotor in the parking positions.

2. A wind turbine according to claim 1, wherein the parking positions comprise six different positions in which the longitudinal direction of one of the blades is substantially horizontal.

3. A wind turbine according to claim 1 or 2, wherein the parking positions comprise six different positions in which the longitudinal direction of one of the blades is substantially vertical.

4. A wind turbine according to any of the preceding claims, wherein at least two of the nacelle-openings are located at different vertical levels in the nacelle.

5. A wind turbine according to any of the preceding claims, wherein at least one of the nacelle-openings is formed in an end wall of the nacelle, the end wall facing the rotor-centre-structure.

6. A wind turbine according to claim 5, wherein the rotor extends through a rotor opening formed in the end wall, and the at least two passages are provided at opposite sides of the rotor opening.

7. A wind turbine according to any of the preceding claims, wherein at least one of the nacelle-openings is formed in a nacelle-wall being angled relative to the axis.

8. A wind turbine according to any of the preceding claims, wherein at least one of the rotor-centre-structure-openings is facing the nacelle.

9. A wind turbine according to any of the preceding claims, wherein at least one of the passages comprises a closing structure adapted to bar the openings.

10. A wind turbine according to claim 9, comprising a safety structure adapted to release the closing structure when at least two nacelle-openings are in communication with two matching rotor-centre-structure-openings.

11. A wind turbine according to any of the preceding claims, wherein the rotor-centre-structure comprises a hub and a spinner covering the hub.

12. A wind turbine according to claim 11, where the rotor-centre-structure-openings are provided in the spinner.

13. A wind turbine according to claim 11 or 12, wherein a confined space is defined between the spinner and the hub.

14. A wind turbine according to any of the preceding claims, where the nacelle-openings are brought in communication with the rotor-centre-structure-openings when the openings are aligned.

15. A method of establishing access between a nacelle and a rotor-centre-structure of a wind turbine, the rotor-centre-structure being rotatable about an axis and relative to the nacelle, the method comprising the steps of:
- providing a plurality of nacelle-openings into the nacelle;
- providing a plurality of rotor-centre-structure-openings into the rotor-centre-structure;
- providing a braking system configured to stop a rotor in a plurality of parking positions; and
- predefining the plurality of parking positions, wherein each of the parking positions provides at least two simultaneously appearing passages suitable for passage of personnel from the nacelle into an inner space in the rotor-centre-structure, each passage being provided by one of the nacelle-openings and one of the RCS-openings.

## Patentansprüche

1. Windturbine, die eine Gondel (1), einen Rotor (2), der um eine Achse und relativ zur Gondel rotierbar ist, und ein Bremssystem umfasst, wobei der Rotor eine Vielzahl von Blättern umfasst, die an einer Rotorzentrumstruktur montiert sind und angepasst, in einer Vielzahl von Parkpositionen geparkt zu werden, wobei jede der Parkpositionen mindestens zwei gleichzeitig erscheinende Passagen bereitstellt, die zum Passieren von Personal von der Gondel in einen Innenraum in der Rotorzentrumstruktur geeignet sind, wobei jede Passage durch eine Gondelöffnung (5) in die Gondel in Verbindung mit einer zusammenpassenden Rotorzentrumstrukturöffnung (6) in die Rotorzentrumstruktur gebildet ist und wobei das Bremssystem dazu ausgelegt ist, den Rotor in den Parkpositionen anzuhalten.

2. Windturbine nach Anspruch 1, wobei die Parkpositionen sechs verschiedene Positionen umfassen, in denen die Längsrichtung eines der Blätter im Wesentlichen horizontal ist.

3. Windturbine nach Anspruch 1 oder 2, wobei die Parkpositionen sechs verschiedene Positionen umfassen, in denen die Längsrichtung eines der Blätter im Wesentlichen vertikal ist.

4. Windturbine nach einem der vorstehenden Ansprüche, wobei mindestens zwei der Gondelöffnungen sich auf verschiedenen vertikalen Niveaus in der Gondel befinden.

5. Windturbine nach einem der vorstehenden Ansprüche, wobei mindestens eine der Gondelöffnungen in einer Stirnwand der Gondel gebildet ist, wobei die Stirnwand der Rotorzentrumstruktur zugewandt ist.

6. Windturbine nach Anspruch 5, wobei sich der Rotor durch eine Rotoröffnung erstreckt, die in der Stirnwand gebildet ist, und die mindestens zwei Passagen auf gegenüberliegenden Seiten der Rotoröffnung bereitgestellt sind.

7. Windturbine nach einem der vorstehenden Ansprüche, wobei mindestens eine der Gondelöffnungen in einer Gondelwand gebildet ist, die relativ zur Achse abgewinkelt ist.

8. Windturbine nach einem der vorstehenden Ansprüche, wobei mindestens eine der Rotorzentrumstrukturöffnungen der Gondel zugewandt ist.

9. Windturbine nach einem der vorstehenden Ansprüche, wobei mindestens eine der Passagen eine Schließstruktur umfasst, die angepasst ist, die Öffnungen zu versperren.

10. Windturbine nach Anspruch 9, die eine Sicherheitsstruktur umfasst, die angepasst ist, die Schließstruktur freizugeben, wenn mindestens zwei Gondelöffnungen mit zwei zusammenpassenden Rotorzentrumstrukturöffnungen verbunden sind.

11. Windturbine nach einem der vorstehenden Ansprüche, wobei die Rotorzentrumstruktur eine Nabe und eine Nabenhaube, die die Nabe abdeckt, umfasst.

12. Windturbine nach Anspruch 11, wobei die Rotorzentrumstrukturöffnungen in der Nabenhaube bereitgestellt sind.

13. Windturbine nach Anspruch 11 oder 12, wobei zwischen der Nabenhaube und der Nabe ein begrenzter Raum definiert ist.

14. Windturbine nach einem der vorstehenden Ansprüche, wobei die Gondelöffnungen mit den Rotorzentrumstrukturöffnungen in Verbindung gebracht werden, wenn die Öffnungen ausgerichtet werden.

15. Verfahren zum Herstellen eines Zugangs zwischen einer Gondel und einer Rotorzentrumstruktur einer Windturbine, wobei die Rotorzentrumstruktur um eine Achse und relativ zur Gondel rotierbar ist, wobei das Verfahren die folgenden Schritte umfasst:
- Bereitstellen einer Vielzahl von Gondelöffnungen in die Gondel;
- Bereitstellen einer Vielzahl von Rotorzentrumstrukturöffnungen in die Rotorzentrumstruktur;
- Bereitstellen eines Bremssystems, das dazu ausgelegt ist einen Rotor in einer Vielzahl von Parkpositionen anzuhalten; und
- Vordefinieren der Vielzahl von Parkpositionen, wobei jede der Parkpositionen mindestens zwei gleichzeitig erscheinende Passagen bereitstellt, die zum Passieren von Personal von der Gondel in einen Innenraum in der Rotorzentrumstruktur geeignet sind, wobei jede Passage durch eine der Gondelöffnungen und eine der RCS-Öffnungen bereitgestellt ist.

## Revendications

1. Éolienne comprenant une nacelle, (1) un rotor (2) pouvant tourner autour d'un axe et par rapport à la nacelle, et un système de freinage, le rotor comprenant une pluralité de pales montées sur une structure centrale de rotor et étant adapté pour être bloqué dans une pluralité de positions de blocage, dans laquelle chacune des positions de blocage fournit au moins deux passages apparaissant simultanément adaptés pour un passage du personnel de la nacelle dans un espace intérieur de la structure centrale de rotor, chaque passage étant formé par une ouverture donnant sur la nacelle (5) dans la nacelle en communication avec une ouverture donnant sur la structure centrale de rotor correspondante (6) dans la structure centrale de rotor, et dans laquelle le système de freinage est configuré pour arrêter le rotor dans les positions de blocage.

2. Éolienne selon la revendication 1, dans laquelle les positions de blocage comprennent six différentes positions dans lesquelles la direction longitudinale de l'une des pales est sensiblement horizontale.

3. Éolienne selon la revendication 1 ou 2, dans laquelle les positions de blocage comprennent six différentes positions dans lesquelles la direction longitudinale de l'une des pales est sensiblement verticale.

4. Éolienne selon l'une quelconque des revendications précédentes, dans laquelle au moins deux des ouvertures donnant sur la nacelle sont situées à différents niveaux verticaux de la nacelle.

5. Éolienne selon l'une quelconque des revendications précédentes, dans laquelle au moins l'une des ouvertures donnant sur la nacelle est formée dans une paroi d'extrémité de la nacelle, la paroi d'extrémité étant orientée vers la structure centrale de rotor.

6. Éolienne selon la revendication 5, dans laquelle le rotor s'étend à travers une ouverture de rotor formée dans la paroi d'extrémité, et les au moins deux passages sont fournis au niveau de côtés opposés de l'ouverture de rotor.

7. Éolienne selon l'une quelconque des revendications précédentes, dans laquelle au moins l'une des ouvertures donnant sur la nacelle est formée dans une paroi de la nacelle formant un angle par rapport à l'axe.

8. Éolienne selon l'une quelconque des revendications précédentes, dans laquelle au moins l'une des ouvertures donnant sur la structure centrale de rotor est orientée vers la nacelle.

9. Éolienne selon l'une quelconque des revendications précédentes, dans laquelle au moins l'un des passages comprend une structure de fermeture adaptée pour barrer les ouvertures.

10. Éolienne selon la revendication 9, comprenant une structure de sécurité adaptée pour libérer la structure de fermeture lorsqu'au moins deux ouvertures donnant sur la nacelle sont en communication avec deux ouvertures donnant sur la structure centrale de rotor correspondantes.

11. Éolienne selon l'une quelconque des revendications précédentes, dans laquelle la structure centrale de rotor comprend un moyeu et un carénage recouvrant le moyeu.

12. Éolienne selon la revendication 11, où les ouvertures donnant sur la structure centrale de rotor sont fournies dans le carénage.

13. Éolienne selon la revendication 11 ou 12, dans laquelle un espace confiné est défini entre le carénage et le moyeu.

14. Éolienne selon l'une quelconque des revendications précédentes, où les ouvertures donnant sur la nacelle sont amenées en communication avec les ouvertures donnant sur la structure centrale de rotor lorsque les ouvertures sont alignées.

15. Procédé d'établissement d'un accès entre une nacelle et une structure centrale de rotor d'une éolienne, la structure centrale de rotor pouvant tourner autour d'un axe et par rapport à la nacelle, le procédé comprenant les étapes de :
- fourniture d'une pluralité d'ouvertures donnant sur la nacelle dans la nacelle ;
- fourniture d'une pluralité d'ouvertures donnant sur la structure centrale de rotor dans la structure centrale de rotor ;
- fourniture d'un système de freinage configuré pour arrêter un rotor dans une pluralité de positions de blocage ; et
- prédéfinition de la pluralité de positions de blocage, dans lequel chacune des positions de blocage fournit au moins deux passages apparaissant simultanément adaptés pour un passage du personnel de la nacelle dans un espace intérieur de la structure centrale de rotor, chaque passage étant fourni par l'une des ouvertures donnant sur la nacelle et l'une des ouvertures SCR.
